# EUROPEAN PATENT SPECIFICATION

(11) **EP 1 133 206 B1**
(45) Date of publication and mention of the grant of the patent: **03.05.2006**
(21) Application number: 01301269.5
(22) Date of filing: 14.02.2001
(51) Int. Cl.: H04Q 7/32

(54) **Generating and logging reminders for mobile users**
Erzeugung und Registrierung von Hinweisen für mobile Benutzer
Production et enregistrement de rappel pour des utilisateurs mobile

(30) Priority: 03.03.2000 GB 0005026
(43) Date of publication of application: 12.09.2001
(73) Proprietor: Hewlett-Packard Company, Palo Alto, California 94304-1112 (US)
(72) Inventor: Sellen, Abigail Jane, Newbury, Berkshire RG14 6PR (GB); I'Anson, Colin, Frenchay, Bristol BS16 1JL (GB)
(74) Representative: Squibbs, Robert Francis

(56) References cited:
- WO-A-99/12364
- DE-A- 19 820 162
- US-A- 5 724 410
- US-A- 5 946 629
- US-A- 5 995 824

## Description

### Field of the Invention

The present invention relates to the generation of verbal reminders whilst mobile and, in particular, but not exclusively, to a service system for handling such reminders.

### Background of the Invention

Communication infrastructures suitable for mobile users (in particular, though not exclusively, cellular radio infrastructures) have now become widely adopted. Whilst the primary driver has been mobile telephony, the desire to implement mobile data-based services over these infrastructures, has led to the rapid development of data-capable bearer services across such infrastructures. This has opened up the possibility of many Internet-based services being available to mobile users.

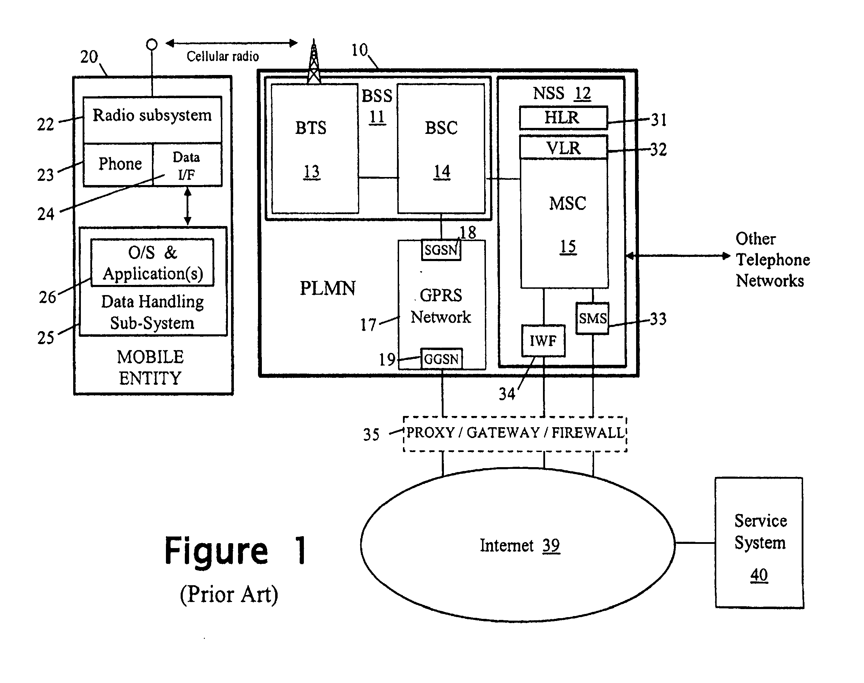

By way of example, Figure 1 shows one form of known communication infrastructure for mobile users providing both telephony and data-bearer services. In this example, a mobile entity 20, provided with a radio subsystem 22 and a phone subsystem 23, communicates with the fixed infrastructure of GSM PLMN (Public Land Mobile Network) 10 to provide basic voice telephony services. In addition, the mobile entity 20 includes a data-handling subsystem 25 interworking, via data interface 24, with the radio subsystem 22 for the transmission and reception of data over a data-capable bearer service provided by the PLMN; the data-capable bearer service enables the mobile entity 20 to communicate with a service system 40 connected to the public Internet 39. The data handling subsystem 25 supports an operating environment 26 in which applications run, the operating environment including an appropriate communications stack.

More particularly, the fixed infrastructure 10 of the GSM PLMN comprises one or more Base Station Subsystems (BSS) 11 and a Network and Switching Subsystem NSS 12. Each BSS 11 comprises a Base Station Controller (BSC) 14 controlling multiple Base Transceiver Stations (BTS) 13 each associated with a respective "cell" of the radio network. When active, the radio subsystem 22 of the mobile entity 20 communicates via a radio link with the BTS 13 of the cell in which the mobile entity is currently located. As regards the NSS 12, this comprises one or more Mobile Switching Centers (MSC) 15 together with other elements such as Visitor Location Registers 32 and Home Location Register 32.

When the mobile entity 20 is used to make a normal telephone call, a traffic circuit for carrying digitised voice is set up through the relevant BSS 11 to the NSS 12 which is then responsible for routing the call to the target phone (whether in the same PLMN or in another network).

With respect to data transmission to/from the mobile entity 20, in the present example three different data-capable bearer services are depicted though other possibilities exist. A first data-capable bearer service is available in the form of a Circuit Switched Data (CSD) service; in this case a full traffic circuit is used for carrying data and the MSC 32 routes the circuit to an InterWorking Function IWF 34 the precise nature of which depends on what is connected to the other side of the IWF. Thus, IWF could be configured to provide direct access to the public Internet 39 (that is, provide functionality similar to an IAP - Internet Access Provider LAP). Alternatively, the IWF could simply be a modem connecting to a PSTN; in this case, Internet access can be achieved by connection across the PSTN to a standard IAP.

A second, low bandwidth, data-capable bearer service is available through use of the Short Message Service that passes data carried in signalling channel slots to an SMS unit which can be arranged to provide connectivity to the public Internet 39.

A third data-capable bearer service is provided in the form of GPRS (General Packet Radio Service which enables IP (or X.25) packet data to be passed from the data handling system of the mobile entity 20, via the data interface 24, radio subsystem 21 and relevant BSS 11, to a GPRS network 17 of the PLMN 10 (and vice versa). The GPRS network 17 includes a SGSN (Serving GPRS Support Node) 18 interfacing BSC 14 with the network 17, and a GGSN (Gateway GPRS Support Node) interfacing the network 17 with an external network (in this example, the public Internet 39). Full details of GPRS can be found in the ETSI (European Telecommunications Standards Institute) GSM 03.60 specification. Using GPRS, the mobile entity 20 can exchange packet data via the BSS 11 and GPRS network 17 with entities connected to the public Internet 39.

The data connection between the PLMN 10 and the Internet 39 will generally be through a firewall 35 with proxy and/or gateway functionality.

Different data-capable bearer services to those described above may be provided, the described services being simply examples of what is possible.

In Figure 1, a service system 40 is shown connected to the Internet 40, this service system being accessible to the OS/application 26 running in the mobile entity by use of any of the data-capable bearer services described above. The data-capable bearer services could equally provide access to a service system that is within the domain of the PLMN operator or is connected to another public or private data network.

With regard to the OS/application software 26 running in the data handling subsystem 25 of the mobile entity 20, this could, for example, be a WAP application running on top of a WAP stack where "WAP" is the Wireless Application Protocol standard. Details of WAP can be found, for example, in the book "Official Wireless Application Protocol" Wireless Application Protocol Forum, Ltd published 1999 Wiley Computer Publishing. Where the OS/application software is WAP compliant, the firewall will generally also serve as a WAP proxy and gateway. Of course, OS/application 26 can comprise other functionality (for example, an e-mail client) instead of, or additional to, the WAP functionality.

The mobile entity 20 may take many different forms. For example, it could be two separate units such as a mobile phone (providing elements 22-24) and a mobile PC (data-handling system 25) coupled by an appropriate link (wireline, infrared or even short range radio system such as Bluetooth). Alternatively, mobile entity 20 could be a single unit such as a mobile phone with WAP functionality. Of course, if only data transmission/reception is required (and not voice), the phone functionality 24 can be omitted; an example of this is a PDA with built-in GSM data-capable functionality whilst another example is a digital camera (the data-handling subsystem) also with built-in GSM data-capable functionality enabling the upload of digital images from the camera to a storage server.

Whilst the above description has been given with reference to a PLMN based on GSM technology, it will be appreciated that many other cellular radio technologies exist and can typically provide the same type of functionality as described for the GSM PLMN 10.

People often think of things they should do (or should have done) and, in order not to forget to take some related action, make themselves a quick reminder (for example, a simple written note). However, persons driving a vehicle or doing something else that requires their continuous attention, cannot make the normal types of reminders. For such people, verbal reminders, if they can be generated, would be the most convenient and least likely to cause sustained distraction from the task in hand.

As more and more people come to have personal mobile telephones, it would be useful to find some way of being able to use these telephones also as a means for recording verbal reminders. The use of cell phones for recording speech has been previously, for example in the following four patent specifications:
- US 5,867,793 describes a cell phone with built-in digital message recorder which can be used by user to record message for subsequent transmission, or for recording calls for subsequent local playback.
- US 5,995,824 discloses an arrangement for effecting call recordal and storage either locally in a cell phone or in a mobile network voice-mail box. The arrangement is primarily intended as a safety aid for drivers, enabling them to start recording a call at any time. In one embodiment the recording is done in a voice-mailbox connected to the MSC/VLR (this being achieved by the set up of a three-way call connection). Retrieval of the recorded speech is done in standard manner for accessing voice-mail.
- US 5,790,957 teaches a system for effecting speech recall in cell phone in which a user-dictated message or an incoming call can be stored in local memory and subsequently played back locally or sent to a distant phone.
- DE 198 20 162 A discloses apparatus for recording all or part of a voice call for later play back.

To the extent that any of the above-disclosed arrangements is capable of being used for recording personal reminders, they all suffer from the drawback of requiring the user to use the cell phone to retrieve the reminder.

Document WO 99/12364 discloses am SMS/e-mail gateway provided, for example, at a Short Message Service centre; to save space in an SMS message, an e-mail address of interest to a user is allocated a virtual subscriber number to which an SMS message can be sent, thereby obviating the need to include the e-mail address in the SMS message itself.

It is an object of the present invention to provide a system and method for recording verbal reminders which then makes them available back to the user in a convenient way.

### Summary of the Invention

According to one aspect of the present invention, there is provided a method of logging voice reminders from a mobile user using a mobile device that can communicate with a mobile radio infrastructure, the method involving carrying out the following steps:
(a) the user activating the mobile device for receiving a voice reminder independently of a call to another user, and then vocally inputting the voice reminder into the device;
(b) digitally recording the voice reminder in an audio format and generating an e-mail including the digitally recorded voice reminder; and
(c) passing the e-mail over a data network to a message store associated with the user, and storing the e-mail in the message store for subsequent audio access of the voice reminder by said user.

The user can thus record a verbal reminder and have it sent to their e-mail box along with their other e-mail (and preferably with a subject heading of "Reminder"). Since checking e-mail is regular daily routine for most business users, the reminder is unlikely to get forgotten as could be the case with the prior arrangements for recording reminder messages through a cell phone.

According to another aspect of the present invention, there is further provided a service system for handling a voice reminder generated by a user using a telephone device and independently of calling another user, the system comprising:
- input means for digitally recording the voice reminder in an audio format from the telephone device through a telephone network together with a user ID indicative of the originator of the reminder;
- means for converting the user ID into a corresponding e-mail address on a data network, this e-mail address being that of the originator of the voice reminder,
- output means for including the digitally recorded voice reminder into an e-mail having as its destination address said e-mail address of the originator of the voice reminder,
- means for sending the voice reminder-bearing e-mail out over said data network.

### Brief Description of the Drawings

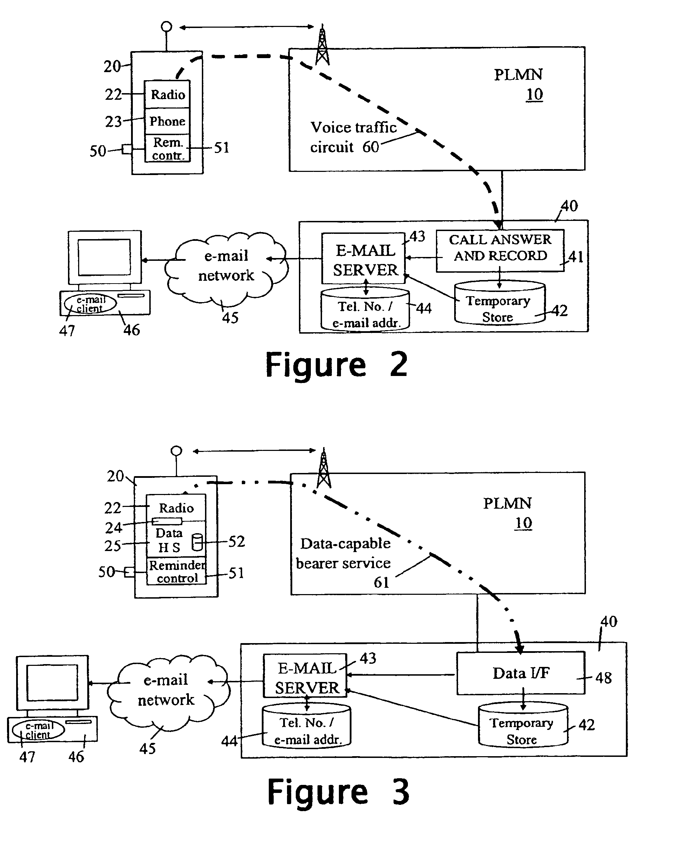

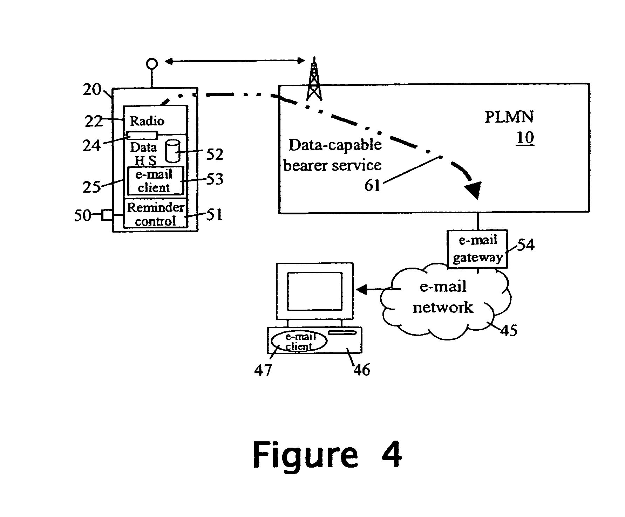

Methods of logging verbal reminders whilst mobile and a service-system for transferring verbal reminders, both embodying the present invention, will now be described, by way of nonlimiting example, with reference to the accompanying diagrammatic drawings, in which:
. **Figure 1** is a diagram of a known communications infrastructure usable for transferring voice and data to/from a mobile entity;
. **Figure 2** is a diagram illustrating a first method implementing the present invention which uses an intermediate service system;
. **Figure 3** is a diagram illustrating a second method implementing the present invention, this method also using an intermediate service system; and
. **Figure 4** is a diagram illustrating a third method implementing the present invention.

### Best Mode of Carrying Out the Invention

Reminder-logging methods and service systems embodying the invention will now be described with reference to Figure 2 to 4. It is to be understood that the present invention is not limited to the specifics of the mobile entity and communication infrastructure shown in Figures 2 to 4 and the generalisations discussed above in relation to Figure 1 regarding these elements apply equally to the present invention unless otherwise indicated.

Considering first the embodiment of Figure 2, a mobile entity 20 in the general form of a cell phone is provided with a reminder control circuit 51 which, when triggered by user operation of an input element (e.g. a button) 50, is effective to cause a voice traffic circuit 60 to be set up through a PLMN 10 (and possibly a connected PSTN) to a service system 40. The user of mobile entity can now dictate a message which is passed as a voice call to the service system.

The service system 40 comprises a call answer subsystem 41 with associated temporary store 42, and an e-mail server 43 with a database 44 for translating telephone numbers to e-mail addresses. The call answering subsystem 41 is operative to capture details (for example, calling party number) of an incoming call over voice traffic circuit 60 and to record the call in digitised form in store 42. Upon the call being terminated the call answer subsystem 41 passes the call details to the e-mail server which forms an e-mail including the recorded voice call retrieved from store 42. The destination address of the e-mail is obtained by doing a look-up in database 44 using the calling party number as the search key. The e-mail is then sent out over e-mail network 45 and is in due course downloaded by an e-mail client 47, here shown as running in a PC 46.

A user wishing to use the reminder service first registers with the service and specifies both the number of the user's associated cell phone 20 and the e-mail address to which the user wishes their dictated reminders to be sent. These details are stored in the database 44. Thereafter, the user can at any time record a reminder simply by operating trigger input 50 to set up voice circuit to the service system and then dictating the reminder into the cell phone. The service system 40 records the message and forwards it in an e-mail message to the e-mail address specified by the user. The user can then later retrieve his/her reminders from their e-mail box via e-mail client 47.

The trigger input 50 can take various forms. For example, the input can be a hard or soft button provided directly on the cellular phone, on a phone accessory or in a very accessible place for the driver of a car. In the latter case, a button can be provided on the steering wheel and connected back to the cellular phone; various methods can be used for connecting the steering wheel button to the phone, for example, an infrared link could be used or the same electrical connection that would be used to connect to a portable PC. The input 50 is not limited to being a button and could, for example, be in the form of a voice recognition circuit.

As regards the reminder control 51 that is triggered by operation of input 50, this can configured simply to provide speed dial functionality for dialing the service system. The appropriate dialing sequences can be stored in the main number memory of the phone or in a memory associated with the control 51 itself.

When the service system answers the call, it can be arranged to play a prompt message to the user. As already noted, the identity of the cell phone is made known to the service system - this can be done by calling party ID as mentioned above, by an in-band data transfer (for example by using DTMF tones), or by an enquiry made by the service system to PLMN 10 via a proprietary or open interface.

With respect to the e-mail message generated by e-mail server 43, this message can contain in addition to the digitised reminder, further details of the call such as time received, length, etc., as text. The subject field of the message can conveniently be used to indicate that this is a reminder. The e-mail source address is also clearly coded to identify that it originated with the reminder service system.

The e-mail destination address may be either the main e-mail address for the user or a special "reminder" address for the user. In the former case, when the e-mail arrives at the user's e-mail client (or-e-mail server that services multiple clients), the source and subject fields can be used to identify that this is a reminder. The message is then placed in the in-box or a specific mail folder for reminders. The reminders can be further manipulated by the e-mail client to make them more obvious, for example placing them onto a task list in a calendar application.

The user can then listen to these reminder messages from their e-mail in-box or can re-route them to a multimedia to-do list. This can remain in their e-mail system or may be implemented via a personal organiser appliance.

Figure 3 shows a second embodiment of the invention in which the mobile entity includes a data-handling subsystem 25 with local data store 52. In this embodiment, when the user activates input 50 to record a reminder, the reminder control 51 (in the form of an application run by the subsystem 25) causes the dictated reminder to be digitized and temporarily stored in local store 52. Subsequently (for example, during low tariff periods), the reminder control initiates the set up of a data bearer channel 61 through the PLMN 10 to a data interface 48 of the reminder service system 40. A user identifier and other reminder details are then passed over this data channel, together with the digitized reminder, to the service system 40 where the reminder is temporarily held in store 42.

Service system 40 could then function as already described above in relation to the Figure 2 to generate an e-mail and send it out over e-mail network 45 to be retrieved in due course by e-mail client 47.

With regard to the Figure 3 service system 40, whilst this is shown as connected directly to the PLMN 10, it will be appreciated that the service system could be connected to the PLMN via the public Internet (as in Figure 1), to a GPRS network of PLMN 10, or to another fixed data network interfacing directly or indirectly with the network 17 or network 39.

A further embodiment is shown in Figure 4. In this embodiment, the dictated reminder is temporarily stored in mobile entity as for the Figure 3 embodiment. However, the reminder is then formed directly into an e-mail in the mobile entity itself and sent via a data bearer channel 61 through the PLMN 10 to an e-mail gateway 54 on e-mail network 45. The e-mail is addressed to the user's e-mailbox, the e-mail address of the latter being stored in the data handling subsystem 25. The Figure 4 embodiment avoids the need for a special service system for forwarding on the reminder as an e-mail.

The above-described embodiments are based on the use of GSM and e-mail. As already indicated, the present invention is not limited to such implementation specifics. For example, any store and forward data transfer method can be used in place of e-mail (such as Lotus Notes), and any appropriate mobile communications network can be used (such as IS95).

## Claims

1. A method of logging voice reminders from a mobile user using a mobile device (20) that can communicate with a mobile radio infrastructure (10), the method involving carrying out the following steps:
a) the user activating the mobile device (20) for receiving a voice reminder independently of a call to another user, and then vocally inputting the voice reminder into the device;
b) digitally recording the voice reminder in an audio format and generating an e-mail including the digitally recorded voice reminder; and
c) passing the e-mail over a data network to a message store associated with the user, and storing the e-mail in the message store for subsequent audio access of the voice reminder by said user.

2. A method according to claim 1, wherein activating the mobile device (20) for receiving a voice reminder in step (a) initiates the set up of a connection (60; 61) through the mobile radio infrastructure (10) to a service system (40) on the data network (45), the voice reminder being transmitted over the connection (60; 61) to the service system (40) in step (c) substantially as the voice reminder is vocally input; step (c) further involving:
- including the voice reminder into said e-mail message at the service system (40),
- addressing the e-mail to the message store associated with the user, and
- sending the e-mail out over the data network (45) from the service system (40) to the message store.

3. A method according to claim 1, wherein step (c) is deferred relative to steps (a) and (b), the voice reminder being temporarily stored in the mobile device (20) prior to step (c) being effected, step (c) involving:
- setting up a connection (60; 61) through the mobile radio infrastructure (10) to a service system (40) on the data network (45),
- transmitting the voice reminder over the connection (60; 61) to the service system (40),
- including the voice reminder into said e-mail at the service system (40),
- addressing the e-mail to the message store associated with the user, and
- sending thee-mail out over the data network (45) from the service system (40) to the message store.

4. A method according to claim 3, wherein step (c) is effected at a time when the tariff for the connection (60; 61) used is relatively low.

5. A method according to claim 2 or claim 3, wherein said connection comprises a voice circuit (60) through the mobile radio infrastructure (10).

6. A method according to claim 2 or claim 3, wherein said connection comprises a data connection over a data-capable service (61) through the mobile infrastructure (10).

7. A method according to claim 1, wherein said e-mail is addressed to an e-mail box dedicated to reminders for the user.

8. A method according to claim 1, wherein the e-mail is formed with a subject field indicating that it is a reminder message.

9. A method according to claim 2 or claim 3, wherein the set up of said connection (60; 61) involves the supply of a calling ID to the service system (40) in respect of the mobile device (20), the service system (40) using this ID to look up a destination address on the data network (45) for the voice reminder and sending the reminder-bearing e-mail to this address.

10. A method according to claim 1, wherein in step (b) the e-mail is generated in the device (20), step (c) involving sending the e-mail over a data-capable bearer service (61) of the mobile radio infrastructure (10) to the data network (45) and through the latter to the message store.

11. A method according to claim 10, wherein step (c) is deferred relative to steps (a) and (b), the e-mail being temporarily stored in the mobile device (20) prior to step (c) being effected.

12. A method according to claim 11, wherein step (c) is effected at a time when the tariff for the data-capable bearer service (61) used is relatively low.

13. A method according to claim 10, wherein the e-mail is formed with a subject field indicating that it is a reminder message.

14. A service system (40) for handling a voice reminder generated by a user using a telephone device (20) and independently of calling another user, the system comprising:
- input means (41; 48) for digitally recording the voice reminder in an audio format from the telephone device (20) through a telephone network (10) together with a user ID indicative of the originator of the reminder;
- means for converting the user ID into a corresponding e-mail address on a data network (45), this e-mail address being that of the originator of the voice reminder,
- output means (43) for including the digitally recorded voice reminder into an e-mail having as its destination address said e-mail address of the originator of the voice reminder,
- means (43) for sending the voice reminder-bearing e-mail out over said data network (45).

15. A system according to claim 14, wherein said user ID is a telephone number.

16. A system according to claim 14, wherein said input means comprises a voice circuit interface (41).

17. A system according to claim 14, wherein said input means comprises a data interface (48) for receiving said voice reminder as data over a data-capable bearer service (61) of a mobile telephone infrastructure (10).

18. A system according to claim 14, including means for providing said e-mail with a subject field indicating that it is a reminder message.

## Patentansprüche

1. Ein Verfahren zum Registrieren von Spracherinnerungshilfen von einem Mobilfunkteilnehmer, der eine Mobilvorrichtung (20) verwendet, die mit einer Mobilfunkinfrastruktur (10) kommunizieren kann, wobei das Verfahren ein Durchführen folgender Schritte beinhaltet:
a) der Benutzer aktiviert die Mobilvorrichtung (20) zum Empfangen einer Spracherinnerungshilfe unabhängig von einem Anruf an einen anderen Benutzer und gibt die Spracherinnerungshilfe dann mittels der Stimme in die Vorrichtung ein;
b) digitales Aufzeichnen der Spracherinnerungshilfe in einem Audioformat und Erzeugen einer E-Mail, die die digital aufgezeichnete Spracherinnerungshilfe umfasst; und
c) Leiten der E-Mail über ein Datennetzwerk an einen dem Benutzer zugeordneten Nachrichtenspeicher, und Speichern der E-Mail in dem Nachrichtenspeicher zum Zweck eines späteren Audiozugriffs auf die Spracherinnerungshilfe durch den Benutzer.

2. Ein Verfahren gemäß Anspruch 1, bei dem das Aktivieren der Mobilvorrichtung (20) zum Empfangen einer Spracherinnerungshilfe bei Schritt (a) das Einrichten einer Verbindung (60; 61) durch die Mobilfunkinfrastruktur (10) mit einem Dienstsystem (40) in dem Datennetzwerk (45) einleitet, wobei die Spracherinnerung, die bei Schritt (c) im Wesentlichen als Spracherinnerungshilfe über die Verbindung (60; 61) an das Dienstsystem (40) gesendet wird, stimmlich eingegeben wird; wobei Schritt (c) ferner folgende Schritte beinhaltet:
- Aufnehmen der Spracherinnerungshilfe in die E-Mail-Nachricht an dem Dienstsystem (40),
- Adressieren der E-Mail an den dem Benutzer zugeordneten Nachrichtenspeicher, und
- Aussenden der E-Mail über das Datennetzwerk (45) von dem Dienstsystem (40) an den Nachrichtenspeicher.

3. Ein Verfahren gemäß Anspruch 1, bei dem Schritt (c) relativ zu Schritten (a) und (b) zurückgestellt wird, wobei die Spracherinnerungshilfe vorübergehend in der Mobilvorrichtung (20) gespeichert wird, bevor Schritt (c) bewerkstelligt wird, wobei Schritt (c) folgende Schritte beinhaltet:
- Einrichten einer Verbindung (60; 61) durch die Mobilfunkinfrastruktur (10) mit einem Dienstsystem (40) in dem Datennetzwerk (45),
- Senden der Spracherinnerungshilfe über die Verbindung (60; 61) an das Dienstsystem (40),
- Aufnehmen der Spracherinnerungshilfe in die E-Mail-Nachricht an dem Dienstsystem (40),
- Adressieren der E-Mail an den dem Benutzer zugeordneten Nachrichtenspeicher, und
- Aussenden der E-Mail über das Datennetzwerk (45) von dem Dienstsystem (40) an den Nachrichtenspeicher.

4. Ein Verfahren gemäß Anspruch 3, bei dem Schritt (c) zu einer Zeit bewerkstelligt wird, wenn der Tarif für die verwendete Verbindung (60; 61) relativ niedrig ist.

5. Ein Verfahren gemäß Anspruch 2 oder 3, bei dem die Verbindung eine Sprachschaltung (60) durch die Mobilfunkinfrastruktur (10) umfasst.

6. Ein Verfahren gemäß Anspruch 2 oder 3, bei dem die Verbindung eine Datenverbindung über einen datenfähigen Dienst (61) durch die Mobilinfrastruktur (10) umfasst.

7. Ein Verfahren gemäß Anspruch 1, bei dem die E-Mail an eine E-Mailbox adressiert wird, die für Erinnerungshilfen für den Benutzer reserviert ist.

8. Ein Verfahren gemäß Anspruch 1, bei dem die E-Mail mit einem Betreffsfeld gebildet wird, das angibt, dass es sich um eine Erinnerungshilfenachricht handelt.

9. Ein Verfahren gemäß Anspruch 2 oder 3, bei dem das Einrichten der Verbindung (60; 61) das Liefern einer Anrufend-ID an das Dienstsystem (40) bezüglich der Mobilvorrichtung (20) beinhaltet, wobei das Dienstsystem (40) diese ID verwendet, um eine Zieladresse in dem Datennetzwerk (45) für die Spracherinnerungshilfe nachzuschlagen, und die die Erinnerung aufweisende E-Mail an diese Adresse sendet.

10. Ein Verfahren gemäß Anspruch 1, bei dem die E-Mail bei Schritt (b) in der Vorrichtung (20) erzeugt wird, wobei Schritt (c) ein Senden der E-Mail über einen datenfähigen Trägerdienst (61) der Mobilfunkinfrastruktur (10) an das Datennetzwerk (45) und durch Letzteres an den Nachrichtenspeicher beinhaltet.

11. Ein Verfahren gemäß Anspruch 10, bei dem Schritt (c) relativ zu den Schritten (a) und (b) zurückgestellt wird, wobei die E-Mail vorübergehend in der Mobilvorrichtung (20) gespeichert wird, bevor Schritt (c) durchgeführt wird.

12. Ein Verfahren gemäß Anspruch 11, bei dem Schritt (c) zu einer Zeit durchgeführt wird, wenn der Tarif für den verwendeten datenfähigen Trägerdienst (61) relativ niedrig ist.

13. Ein Verfahren gemäß Anspruch 10, bei dem die E-Mail mit einem Betreffsfeld gebildet wird, das angibt, dass es sich um eine Erinnerungshilfenachricht handelt.

14. Ein Dienstsystem (40) zum Handhaben einer Spracherinnerungshilfe, die durch einen Benutzer unter Verwendung einer Telefonvorrichtung (20) und unabhängig davon, einen anderen Benutzer anzurufen, erzeugt wird, wobei das System folgende Merkmale umfasst:
- eine Eingabeeinrichtung (41; 48) zum digitalen Aufzeichnen der Spracherinnerungshilfe in einem Audioformat von der Telefonvorrichtung (20) durch ein Telefonnetzwerk (10) zusammen mit einer Benutzer-ID, die den Urheber der Erinnerungshilfe angibt;
- eine Einrichtung zum Umwandeln der Benutzer-ID in eine entsprechende E-Mail-Adresse in einem Datennetzwerk (45), wobei diese E-Mail-Adresse die des Urhebers der Spracherinnerungshilfe ist,
- eine Ausgabeeinrichtung (43) zum Aufnehmen der digital aufgezeichneten Spracherinnerungshilfe in eine E-Mail, die als ihre Zieladresse die E-Mail-Adresse des Urhebers der Spracherinnerungshilfe aufweist,
- eine Einrichtung (43) zum Aussenden der die Spracherinnerungshilfe aufweisenden E-Mail über das Datennetzwerk (45).

15. Ein System gemäß Anspruch 14, bei dem die Benutzer-ID eine Telefonnummer ist.

16. Ein System gemäß Anspruch 14, bei dem die Eingabeeinrichtung eine Sprachschaltungsschnittstelle (41) umfasst.

17. Ein System gemäß Anspruch 14, bei dem die Eingabeeinrichtung eine Datenschnittstelle (48) zum Empfangen der Spracherinnerungshilfe als Daten über einen datenfähigen Trägerdienst (61) einer Mobiltelefoninfrastruktur (10) umfasst.

18. Ein System gemäß Anspruch 14, das eine Einrichtung zum Versehen der E-Mail mit einem Betreffsfeld, das angibt, dass es sich um eine Erinnerungshilfenachricht handelt, umfasst.

## Revendications

1. Procédé consistant à enregistrer des rappels vocaux provenant d'un utilisateur mobile qui utilise un appareil mobile (20) qui peut communiquer avec une infrastructure radio mobile (10), le procédé impliquant l'exécution des étapes suivantes :
a) faire activer par l'utilisateur l'appareil mobile (20) pour recevoir un rappel vocal de manière indépendante d'un appel d'un autre utilisateur et, ensuite, entrer de manière vocale le rappel vocal dans l'appareil ; et
b) enregistrer de manière numérique le rappel vocal selon un format audio et générer un courrier électronique incluant le rappel vocal enregistré de manière numérique ; et
c) transmettre le courrier électronique sur un réseau de données à une boîte aux lettres associée à l'utilisateur et stocker le message électronique dans la boîte aux lettres pour un accès audio ultérieur au rappel vocal par ledit utilisateur.

2. Procédé selon la revendication 1, dans lequel le fait d'activer l'appareil mobile (20) pour recevoir un rappel vocal à l'étape (a) déclenche l'initialisation d'une connexion (60 ; 61) à travers l'infrastructure radio mobile (10) à un système de service (40) sur le réseau de données (45), le rappel vocal étant transmis sur la connexion (60 ; 61) au système de service (40) à l'étape (c) sensiblement à mesure que le rappel vocal est entré de manière vocale ; l'étape (c) impliquant en outre les étapes consistant à :
- inclure le rappel vocal dans ledit messages de courrier électronique au système de service (40),
- adresser le courrier électronique à la boîte aux lettres associée à l'utilisateur, et
- expédier le courrier électronique sur le réseau de données (45) depuis le système de service (40) jusqu'à la boîte aux lettres.

3. Procédé selon la revendication 1, dans lequel l'étape (c) est retardée par rapport aux étapes (a) et (b), le rappel vocal étant temporairement stocké dans l'appareil mobile (20) avant que l'étape (c) ne soit effectuée, l'étape (c) impliquant les étapes consistant à :
- initialiser une connexion (60 ; 61) à travers l'infrastructure radio mobile (10) à un système de service (40) sur le réseau de données (45),
- transmettre le rappel vocal sur la connexion (60 ; 61) au système de service (40),
- inclure le rappel vocal dans ledit courrier électronique au système de service (40),
- adresser le courrier électronique à la boîte aux lettres associée à l'utilisateur, et
- expédier le courrier électronique sur le réseau de données (45) depuis le système de service (40) jusqu'à la boîte aux lettres.

4. Procédé selon la revendication 3, dans lequel l'étape (c) est effectuée à un moment où le tarif pour la connexion (60 ; 61) utilisée est relativement bas.

5. Procédé selon la revendication 2 ou la revendication 3, dans lequel ladite connexion comprend un circuit vocal (60) à travers l'infrastructure radio mobile (10).

6. Procédé selon la revendication 2 ou la revendication 3, dans lequel ladite connexion comprend une connexion de données sur un service capable de données (61) à travers l'infrastructure radio mobile (10).

7. Procédé selon la revendication 1, dans lequel ledit courrier électronique est adressé à une boîte de courrier électronique alloué aux rappels pour l'utilisateur.

8. Procédé selon la revendication 1, dans lequel le courrier électronique est formé avec un champ de sujet indiquant qu'il est un message de rappel.

9. Procédé selon la revendication 2 ou la revendication 3, dans lequel l'initialisation de ladite connexion (60 ; 61) implique la fourniture d'une ID (identification) d'appel au système de service (40) par rapport à l'appareil mobile (20), le système de service (40) utilisant cette ID pour chercher une adresse de destination sur le réseau de données (45) pour le rappel vocal et envoyant le courrier électronique portant le rappel à cette adresse.

10. Procédé selon la revendication 1, dans lequel, à l'étape (b), le courrier électronique est généré dans l'appareil (20), l'étape (c) envoyant le courrier électronique sur un service porteur capable de données (61) de l'infrastructure radio mobile (10) au réseau de données (45) et, à travers ce dernier, à la boîte aux lettres.

11. Procédé selon la revendication 10, dans lequel l'étape (c) retardée par rapport aux étapes (a) et (b), le courrier électronique étant temporairement stocké dans l'appareil mobile (20) avant que l'étape (c) ne soit effectuée.

12. Procédé selon la revendication 11, dans lequel l'étape (c) est effectuée à un moment où le tarif pour le service porteur capable de données (61) utilisé est relativement bas.

13. Procédé selon la revendication 10, dans lequel le courrier électronique est formé avec un champ de sujet indiquant qu'il est un message de rappel.

14. Système de service (40) pour traiter un rappel vocal généré par un utilisateur qui utilise un appareil de téléphone (20) et de manière indépendante d'un appel d'un autre utilisateur, le système comprenant :
- des moyens d'entrée (41 ; 48) pour enregistrer de manière numérique le rappel vocal selon un format audio provenant de l'appareil de téléphone (20) à travers un réseau téléphonique (10) conjointement avec une ID d'utilisateur indicative de l'auteur du rappel ;
- des moyens pour convertir l'ID d'utilisateur en une adresse de courrier électronique correspondante sur un réseau de données (45), cette adresse de courrier électronique étant celle de l'auteur du rappel vocal,
- des moyens de sortie (43) pour inclure le rappel vocal enregistré de manière numérique dans un courrier électronique ayant, en tant que son adresse de destination, ladite adresse de courrier électronique de l'auteur du rappel vocal,
- des moyens (43) pour expédier le courrier électronique porteur du rappel vocal sur ledit réseau de données (45).

15. Système selon la revendication 14, dans lequel ladite ID d'utilisateur est un numéro de téléphone.

16. Système selon la revendication 14, dans lequel ledit moyen d'entrée comprend une interface de circuit vocal (41).

17. Système selon la revendication 14, dans lequel ledit moyen d'entrée comprend une interface de données (48) pour recevoir ledit rappel vocal comme données sur un service porteur capable de données (61) d'une infrastructure de téléphone mobile (10).

18. Système selon la revendication 14, incluant des moyens pour prévoir ledit courrier électronique avec un champ de sujet qui indique qu'il est un message de rappel.
